# DEMANDE DE BREVET EUROPEEN

(11) **EP 2 927 571 A1**
(43) Date de publication de la demande: **07.10.2015**
(21) Numéro de dépôt: 15162083.8
(22) Date de dépôt: 31.03.2015
(51) Int. Cl.: F21S 8/10, F21V 8/00

(54) **GUIDE DE LUMIÈRE COMPORTANT UN BANDEAU EN MATIÈRE DIFFUSANTE**

(30) Priorité: 31.03.2014 FR 1452813
(71) Demandeur: VALEO VISION, 93012 Bobigny Cedex (FR)
(72) Inventeur: Germon, François, 49320 VAUCHRÉTIEN (FR); Doha, Jean-François, 49124 Saint Barthélémy d'Anjou (FR); Sagna, Boubacar, 78500 SARTROUVILLE (FR)

(57) **Abrégé**

Dispositif d'éclairage ou de signalisation, comprenant
- un guide de lumière (3) comportant un bloc transparent, comprenant une surface d'entrée (310) et une surface de sortie de la lumière (320),
- une ou plusieurs sources lumineuses (2) situées en vis-à-vis de la surface d'entrée (310) de la lumière,

Ce dispositif est du type dans lequel les rayons émis par la source lumineuse pénètrent dans le bloc transparent (3) au niveau de la surface d'entrée (310) de la lumière et se propagent directement ou par réflexions successives sur les parois du bloc transparent selon une direction générale (D) commune vers la surface de sortie (320) au travers de laquelle ils émergent. Un bandeau (4) composé d'une matière diffusante est disposé selon une section transversale située entre la surface d'entrée (310) et la surface de sortie (320) du guide de lumière, de sorte que les rayons lumineux traversent ledit bandeau (4) en allant de la surface d'entrée (310) vers la surface de sortie (320).

## Description

L'invention concerne le domaine des dispositifs d'éclairage ou de signalisation comprenant un guide optique, et destinés par exemple aux véhicules automobiles.

L'invention s'intéresse également aux procédés de fabrication de ces dispositifs.

Les guides optiques sont couramment utilisés pour amener une surface éclairante dans des zones peu accessibles du dispositif d'éclairage d'un véhicule automobile, en prenant des formes géométriques les plus diverses, de manière à s'adapter aux exigences de style.

Par guide optique ou guide de lumière, on entend ici une pièce transparente ou translucide, à l'intérieur de laquelle des rayons lumineux se déplacent de manière contrôlée, suivant une direction générale commune, depuis une première extrémité du guide ou zone d'entrée comportant une surface d'entrée à proximité de laquelle sont disposées une ou plusieurs sources de lumière, jusqu'à une zone de sortie comportant une surface de sortie d'où les rayons lumineux émergent, de telle manière qu'un observateur a l'impression que la surface de sortie est éclairée et correspond à une source lumineuse.

En fonction du positionnement de la source lumineuse et de la surface de sortie, la propagation de la lumière est directe ou se fait par réflexions internes successives des rayons lumineux sur les faces du guide de lumière, appelées faces de réflexions internes.

La surface de sortie peut être formée par la face ou la section opposée à la face d'entrée ou encore par une face latérale du guide de lumière.

La longueur du guide de lumière, ainsi que la forme et la taille des sections du guide sont définies par le concepteur du dispositif d'éclairage en fonction des contraintes esthétiques et techniques, de manière entre autre à minimiser les pertes lumineuses dans la portion du guide d'onde située entre la surface d'entrée et la surface de sortie.

On observe toutefois que l'intensité lumineuse est susceptible de varier fortement entre deux points distincts de la surface de sortie. Ceci s'explique en grande partie par le fait que les sources de lumière sont en général ponctuelles, et ne permettent pas d'éclairer de manière homogène toute la section de la face d'entrée.

Pour réduire ces variations, les sources de lumière peuvent utilement être associées à des moyens de diffusion tels que des éléments réfléchissants paraboliques, pour élargir la taille du faisceau entrant.

Une autre solution consiste à multiplier le nombre de sources de lumière en ajustant leur répartition.

La surface de sortie peut également comporter des hétérogénéités dont les motifs sont agencés selon des critères esthétiques, de telle sorte que les rayons qui atteignent la surface de sortie selon un certain angle émergent vers l'extérieur, comme si les hétérogénéités étaient elles-mêmes des sources de lumière.

L'invention a pour objet d'apporter une solution alternative ou complémentaire aux dispositifs exposés ci-dessus, facile et peu onéreuse à mettre en oeuvre, et qui a pour but d'homogénéiser l'intensité de la lumière au niveau de la surface de sortie.

Le dispositif d'éclairage ou de signalisation selon l'invention comprend :
- un guide de lumière formé d'un bloc transparent ou translucide, comprenant une surface d'entrée de la lumière et une surface de sortie de la lumière,
- une ou plusieurs sources lumineuses situées en vis-à-vis de la surface d'entrée de la lumière.

Ce guide de lumière est du type dans lequel les rayons émis par la ou les sources lumineuses pénètrent dans le bloc transparent au niveau de la surface d'entrée de la lumière et se propagent directement ou par réflexions successives sur les parois du bloc transparent selon une direction générale commune vers la surface de sortie au travers de laquelle ils émergent, et se caractérise en ce qu'un bandeau, composé d'une matière diffusante, est disposé selon une section transversale entre la surface d'entrée de la lumière et la surface de sortie de la lumière, de sorte que les rayons lumineux traversent ledit bandeau en allant de la surface d'entrée de la lumière vers la surface de sortie de la lumière.

Le bandeau lumineux en matière diffusante permet de répartir les rayons lumineux qui le traversent, et assure ainsi une meilleure homogénéité de l'intensité de la lumière parvenant à la surface de sortie. Par matériau diffusant, on entend selon l'invention un matériau transparent qui présente un haze supérieur à 30%, mesuré selon la norme ASTM D 1003, le haze correspondant au phénomène de diffusion ou dispersion de la lumière qui passe à travers un matériau transparent, entraînant une mauvaise visibilité et / ou l'éblouissement. Préférentiellement, le matériau diffusant présente un haze supérieur à 60%, plus préférentiellement supérieur à 70%.

Préférentiellement, le bandeau est situé entre une zone d'entrée de la lumière et une zone de sortie de la lumière, de manière à ne pas perturber la sortie de la lumière au niveau de ladite surface de sortie de la lumière.

Selon une première alternative, le bandeau a une épaisseur constante.

Selon une seconde alternative, le bandeau a une épaisseur variable.

Préférentiellement, pour réduire les pertes d'intensité lumineuse et minimiser les rayons parasites, l'épaisseur du bandeau a une valeur inférieure à 0,2 fois, et de préférence à 0,1 fois une longueur caractéristique de la section transversale occupée par ledit bandeau.

En pratique, l'épaisseur du bandeau est préférentiellement inférieure à 10mm, et plus préférentiellement inférieure à 5mm.

La section transversale sur laquelle est disposé le bandeau est sensiblement perpendiculaire à la direction générale commune de progression des rayons lumineux.

De manière alternative, la section transversale sur laquelle est disposé le bandeau fait un angle donné, inférieur à 90°, avec la direction générale commune de progression des rayons lumineux

Le bandeau peut occuper toute la section transversale sur laquelle il est placé, ou seulement une partie de ladite section transversale.

Préférentiellement le bandeau est moulé dans le bloc transparent.

Avantageusement, le dispositif d'éclairage ou de signalisation comprend en outre un écran opaque et non réfléchissant disposé entre la zone d'entrée et la zone de sortie de manière à bloquer les rayons parasites qui sortiraient du guide de lumière au niveau du bandeau et à ne pas les rendre visibles pour un observateur extérieur regardant la face de sortie, quelque soit son angle de visualisation. Selon un premier mode de réalisation, l'écran est disposé sur et/ou en vis-à-vis des faces latérales du guide, de part et d'autre du bandeau sensiblement parallèle à la direction générale commune de progression des rayons lumineux. Selon un second mode de réalisation, l'écran est disposé transversalement, par exemple perpendiculairement, au plan d'extension du guide et en aval du bandeau, dans le sens de progression des rayons lumineux dans le guide. Selon un troisième mode combiné des deux modes précédents, l'écran comporte des portions sensiblement parallèles au plan d'extension du guide au niveau du bandeau et des portions orientées transversalement par rapport à ce même plan et disposées en aval dudit bandeau.

L'invention s'intéresse également au procédé de fabrication d'un dispositif d'éclairage ou de signalisation tel que défini ci-dessus, dans lequel le bandeau est obtenu par injection de la matière diffusante dans une section d'un bloc transparent préalablement laissée libre.

Préférentiellement, selon une première alternative, le procédé de fabrication prévoit les étapes au cours desquelles :
- on injecte la matière formant le bloc transparent dans un moule comportant un insert mobile au niveau d'une section transversale donnée et préfigurant la forme du bandeau puis,
- on libère l'insert mobile, et on injecte la matière diffusante formant le bandeau dans ladite section transversale ainsi libérée.

Selon une seconde alternative, le procédé de fabrication peut prévoir les étapes au cours desquelles :
- on injecte la matière formant le bloc transparent dans un premier moule, ou une première cavité d'un moule rotatif, comportant un cordon au niveau d'une section transversale donnée et préfigurant la forme du bandeau puis,
- on transfère le bloc ainsi formé dans un second moule, ou respectivement dans une seconde cavité d'un moule rotatif, et on injecte la matière diffusante formant le bandeau dans ladite section transversale laissée libre.

Selon une variante de la seconde alternative, le procédé de fabrication met en oeuvre un moule rotatif pour bi-injection, la première injection formant le bandeau de matière diffusante qui est ensuite surmoulé par la matière formant le bloc transparent lors d'une seconde injection, après rotation du moule.

L'invention sera mieux comprise à la lecture des figures annexées, qui sont fournies à titre d'exemples et ne présentent aucun caractère limitatif, dans lesquelles :
- La figure 1 représente une vue de dessus d'un dispositif selon l'invention comportant un bandeau diffusant.
- La figure 2 représente un comparatif des diagrammes d'intensité de lumière en sortie de deux dispositifs similaires comportant (fig 2b), ou non (fig 2a), un bandeau diffusant.
- La figure 3 représente une vue en perspective d'un dispositif selon l'invention.
- La figure 4 représente une vue de dessus d'un autre dispositif selon l'invention.
- Les figures 5a, 5b et 5c illustrent schématiquement un premier procédé de réalisation d'un dispositif selon l'invention.
- Les figures 6a, 6b et 6c représentent schématiquement un second procédé de réalisation d'un dispositif conforme à l'invention.

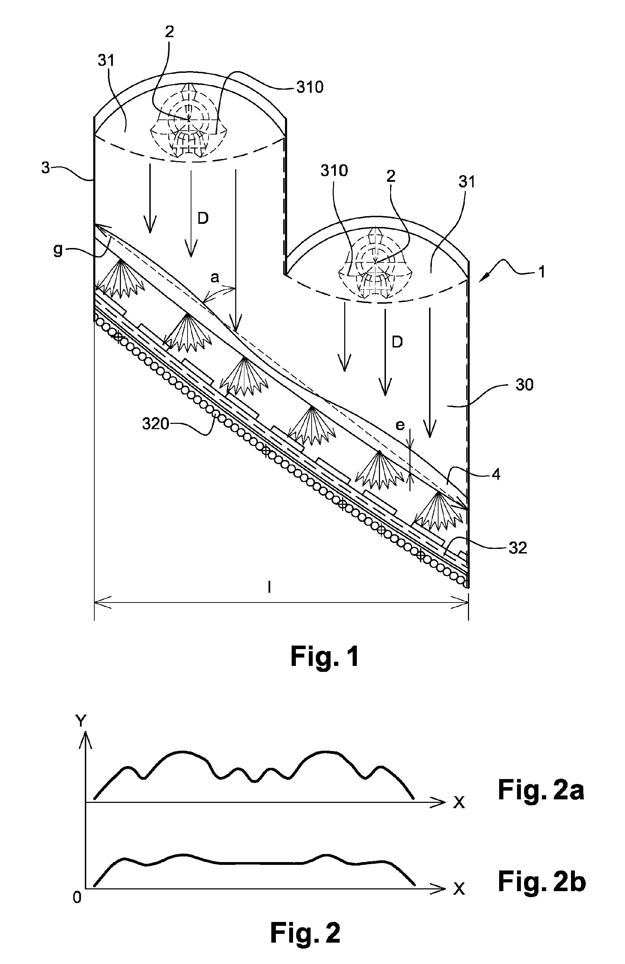

Le dispositif 1, illustré à la figure 1, comprend un bloc 3 réalisé en matériau transparent et formant un guide de lumière. Il peut être coloré ou non. Afin de canaliser la lumière, le bloc transparent 3 est constitué d'une matière telle que du plastique transparent qui a un indice de réfraction plus élevé que le milieu ambiant, en règle générale que l'air ambiant, dans lequel il est destiné à être immergé.

Les matériaux couramment employés sont des polymères, généralement thermoplastiques, choisis préférentiellement dans le groupe constitué par les polymères ou les copolymères amorphes tels que les polyacryliques, les polyesters, les polycarbonates, les polyéthers sulfones ou poly set époxy siloxanes et les polymères d'oléfines cycliques. Certains de ces polymères, tel que le polymétacrylate de méthyle, ont un aspect translucide très prononcé et cristallin, et sont connus sous l'appellation de plastique cristal, particulièrement recherchés pour les effets de style qu'ils permettent d'obtenir.

Le guide de lumière (3) est séparable en trois zones distinctes, dont les frontières (fictives) sont visualisées par des lignes en gras et en pointillés :
- Une zone d'entrée 31 comprenant une ou plusieurs faces d'entrée 310, et qui comprend la zone située en aval de la, ou des surfaces d'entrée.
- Une zone de sortie 32 comprenant une surface de sortie 320, et qui comprend la zone située en amont de la surface de sortie.
- Une zone intermédiaire 30, située entre la zone d'entrée 31 et la zone de sortie 32 et constituant le guide de lumière à proprement parlé, et dans laquelle la lumière se propage selon les principes connus et exposés brièvement ci-dessus, depuis la surface d'entrée 310 jusqu'à la surface de sortie 320, directement ou par réflexions successives sur les faces internes du guide de lumière selon une direction générale commune, notée D.

Le dispositif illustré à la figure 1 comprend deux sources de lumière 2 disposées chacune en vis-à-vis des faces d'entrée 310 situées dans la zone d'entrée 31. L'axe optique principal de chacune des sources est également orienté selon la direction générale commune D. Le nombre de sources de lumière n'est pas limitatif et peut faire l'objet d'ajustements successifs selon l'effet recherché.

Chaque rayon lumineux admis dans le guide de lumière par la face d'entrée 310, et qui ne se propage pas directement vers la face de sortie, atteint une paroi interne du guide de lumière en faisant un angle donné par rapport à la normale de la surface atteinte. Lorsque cet angle est supérieur à un angle de seuil déterminé, il est réfléchi à l'intérieur du guide de lumière. Les rayons lumineux se propagent dans le guide de lumière par réflexions successives sur les parois internes pour arriver vers la zone de sortie 32 au niveau de laquelle on s'arrange pour qu'ils atteignent les parois internes de la surface de sortie 320 avec un angle d'incidence avec la normale inférieur à la valeur de seuil, de sorte qu'ils émergent vers l'extérieur par la surface de sortie 320 du dispositif.

Le dispositif de la figure 1 comprend un bandeau 4, disposé entre la surface d'entrée 310 et la surface de sortie 320 selon une section transversale du guide de lumière 30.

Il peut s'avérer utile de placer le bandeau transversal en amont de la zone de sortie, dans la zone intermédiaire 30, de manière entre autre à ne pas interférer avec les moyens situés dans la zone de sortie et destinés à modifier l'angle de réflexion des rayons lumineux en vue de les faire émerger, en particulier lorsque la surface de sortie est une surface latérale du guide de lumière. En effet, dans la présente invention le bandeau 4 n'a pas pour fonction d'assurer le découplage des rayons lumineux vers la zone de sortie, contrairement à ce qui est décrit dans les documents EP2450726 ou US2009/0161431. Au contraire, on cherche à minimiser, voire à supprimer, les effets du découplage qui pourrait se produire dans le bandeau.

La zone de sortie 32 sera alors définie comme étant la zone dans laquelle les rayons lumineux sont réorientés pour atteindre la face de sortie 320 avec un angle d'incidence avec la normale inférieur à la valeur de seuil.

La zone d'entrée 31, qui ne présente pas de telles contraintes, peut se limiter à la seule zone située juste en aval de la surface d'entrée, après que les rayons lumineux ont pénétré dans le guide de lumière. Elle peut être confondue avec la surface d'entrée.

La zone intermédiaire 30 sera située entre la zone d'entrée 31 et la zone de sortie 32.

Dans la description qui suit, on considère qu'une section est transversale lorsqu'elle n'est pas parallèle à la direction générale commune D selon laquelle les rayons lumineux cheminent de la zone d'entrée 31 et la surface d'entrée 310 vers la zone de sortie 32 et la surface de sortie 320.

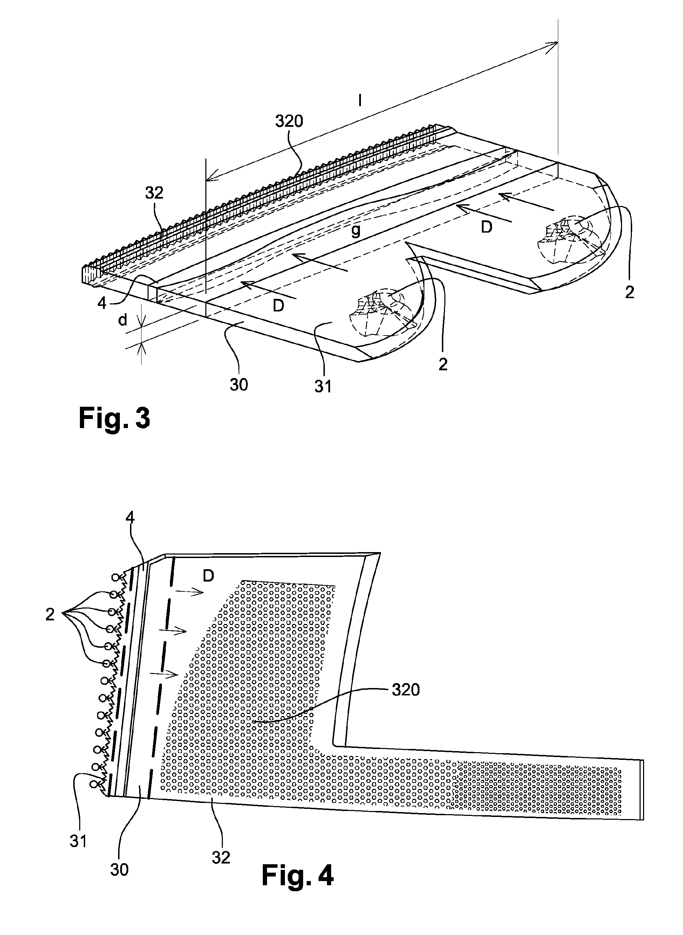

La section transversale occupée par le bandeau peut être une section droite, c'est-à-dire une section sensiblement perpendiculaire à la direction générale D comme cela est illustré aux figures 3 et 4, ou une section faisant un angle donné (a), inférieur à 90°, et comme on l'a vu ci-dessus, supérieur à 0°, avec la dite direction générale D, tel que cela est illustré à la figure 1.

Le bandeau 4 est formé d'un matériau diffusant translucide. Selon l'invention, il s'agit d'un matériau polymère transparent qui présente un haze supérieur à 30%, mesuré selon la norme ASTM D 1003. Préférentiellement, le matériau diffusant présente un haze supérieur à 60%, plus préférentiellement supérieur à 70%. Selon un exemple préféré de réalisation, ce matériau comprend une matrice translucide, qui peut être de même nature que celle des matériaux servant à réaliser le guide de lumière, et qui contient des nanoparticules sur lesquelles la lumière est réfléchie selon des directions aléatoires et de manière anisotrope, de sorte que la lumière traversant le bandeau est diffusée de façon plus homogène. Avantageusement, la matière de la matrice translucide du bandeau 4 est identique à celle du guide de lumière. Les matières étant identiques, on assure ainsi des conditions optimales pour la réalisation et la maitrise du moulage par injection du bandeau 4 dans le guide de lumière.

Par nanoparticule on entend ici une particule ayant, dans un repère orthonormé, une de ses dimensions inférieure à 100nm, et une taille comprise entre 2 et 1000nm, et plus préférentiellement comprise entre 2 et 200 nm. La taille étant la grandeur des deux autres dimensions de la nanoparticule. Les nanoparticules ont de préférence une forme polyédrique ou sphérique.

Ces nanoparticules peuvent utilement être de deux types :
- Un premier type de particule permet la diffusion de la lumière par réflexion totale des rayons lumineux incidents sur leur surface. Il s'agit alors de nanoparticules de nature organique, telles que des nanostructures de carbone, ou inorganiques tes que des nanocristaux, en particulier des nanocristaux d'oxydes métalliques.
- Un deuxième type de nanoparticules émet de la lumière suite à leur excitation par un rayon lumineux incident. Il s'agit alors de particules nanométriques, telles que des quantums dots, de l'ordre de 2 à 10 nm, comportant un noyau semiconducteur, généralement modifié chimiquement en surface.

La densité des nanoparticules dans la matrice en matière transparente permet de contrôler l'homogénéité de la lumière émise ou diffusée.

Le bandeau de matière diffusante est de préférence de faible épaisseur pour éviter, à tout le moins minimiser, en particulier la perte d'intensité lumineuse liée à la diffusion de lumière dans des directions faisant un angle avec la normale à la surface du guide de lumière inférieur au dit angle de seuil, ce qui provoquerait alors la sortie des rayons lumineux vers l'extérieur du guide de lumière en dehors de la surface de sortie 320 proprement dite et génère des rayons parasites indésirables. Avantageusement, on couplera cette épaisseur faible du bandeau à un écran opaque et non réfléchissant interposé entre la zone d'entrée et la zone de sortie de manière à bloquer les éventuels rayons parasites provenant du bandeau. Selon un premier mode de réalisation, non représenté sur les figures, l'écran est disposé sur et/ou en vis-à-vis des faces latérales du guide, de part et d'autre du bandeau sensiblement parallèle à la direction générale commune D de progression des rayons lumineux. Selon un second mode de réalisation, également non représenté, l'écran est disposé de part et d'autre du guide, transversalement, par exemple perpendiculairement, au plan d'extension du guide et en aval du bandeau, dans le sens de progression des rayons lumineux dans le guide. Selon un troisième mode, non représenté, combiné des deux modes précédents, l'écran comporte des portions sensiblement parallèles au plan d'extension du guide au niveau du bandeau et des portions orientées transversalement par rapport à ce même plan et disposées en aval dudit bandeau.

L'épaisseur e du bandeau est mesurée ici selon une direction parallèle à la direction dite générale commune D de circulation des rayons lumineux dans le guide de lumière.

Aussi, on s'arrange pour que l'épaisseur e du bandeau soit inférieure à 0,2 fois, et de préférence à 0,1 fois une longueur caractéristique de la section transversale occupée par ledit bandeau.

On appelle ici longueur caractéristique de la section, la longueur de la droite définissant le trajet libre le plus long. Pour une section circulaire ou elliptique on considèrera la valeur du plus grand diamètre, pour un polyèdre on considèrera la valeur de la diagonale g ayant la plus grande longueur, et pour des formes de sections plus complexes, on procèdera par approches successives en considérant par exemple la longueur développée de la fibre moyenne de ladite section.

Dans le cas illustré à la figure 1 ou à la figure 3, la longueur caractéristique sera la longueur de la diagonale g représentée en pointillés.

En pratique, et dans les cas les plus couramment observés dans l'usage auquel le dispositif d'éclairage ou de signalisation est destiné, à savoir l'équipement des véhicules automobiles, l'épaisseur e du bandeau diffusant est de l'ordre de quelques millimètres et ne dépasse pas la dizaine de millimètres voire, et de préférence, cinq millimètres.

Il peut s'avérer utile de faire varier ladite épaisseur e sur la largeur de la section de manière à moduler les effets de diffusion en fonction de la localisation des sources de lumière.

De même, il est tout à fait possible de prévoir un bandeau dont certaines parties ont une épaisseur nulle, ce qui revient à disposer le bandeau sur une partie seulement de la section du guide de lumière.

Le diagramme représenté à la figure 2 permet de mettre en évidence le phénomène recherché pour un dispositif d'éclairage du type de celui illustré à la figure 1. Les valeurs en ordonnée représentent une évaluation de l'intensité lumineuse mesurée au niveau de la surface de sortie 320, en fonction de la position latérale, dont les valeurs figurent en abscisse. Le diagramme 2a représente les intensités lumineuses mesurées au niveau de la surface de sortie d'un dispositif sans bandeau diffusant, et le diagramme 2b représente la même mesure pour un dispositif identique muni cette fois d'un bandeau diffusant 4 présentant une épaisseur e variable occupant toute une section du guide de lumière, et tel qu'illustré à la figure 1. On observe une meilleure répartition de l'intensité lumineuse.

On remarquera ici, que lorsque la section droite du dispositif, définie comme une section orthogonale à la direction générale commune D, a une largeur l, dont la valeur est très supérieure à sa hauteur h (voir figure 3 ou 4), il est souvent utile de multiplier le nombre de sources de lumière. On entend ici par très supérieure le fait d'avoir une largeur l supérieure à un ou deux multiples de dix fois la hauteur h ; Le dispositif selon l'invention permet alors d'homogénéiser la lumière provenant de toutes ces sources et de mieux la répartir sur toute la surface de sortie.

Après avoir traversé le bandeau diffusant 4, la lumière parvient au niveau de la surface de sortie 320 d'où elle émerge en direction de la zone externe à éclairer.

La surface de sortie peut être une face du guide de lumière occupant une section du dispositif comme cela est illustré à la figure 1 ou à la figure 3.

Elle peut également être constituée par une face latérale comme cela est illustré à la figure 4. On observera que, dans le cas de ce dernier dispositif, en raison de la position particulière de la surface de sortie 320, il est important d'ajuster et d'homogénéiser les quantités de lumière en amont de cette surface de manière à donner l'impression que toute la surface est éclairée avec la même intensité. Ce qui est rendu possible par le dispositif selon l'invention.

L'invention permet enfin de réaliser la surface de sortie dans le même matériau transparent formant le guide de lumière, et qui peut donc avoir un aspect cristal tel que celui recherché par les stylistes.

La fabrication d'un dispositif d'éclairage selon l'invention peut utilement se faire par injection. Ceci est possible lorsque le matériau utilisé est de nature thermoplastique ou que le nombre de matériaux de base utiles à une polymérisation est réduit.

L'avantage de ce procédé est qu'il permet d'obtenir un bloc transparent comprenant un bandeau diffusant ne formant qu'une seule pièce, permettant ainsi de réduire les pertes lumineuses liées aux coefficients de Fresnel entre les interfaces d'entrée et de sortie du bandeau diffusant.

Selon une première méthode, l'injection peut se faire directement dans un moule 50, comprenant un tiroir mobile 51 formant une réserve au niveau de l'emplacement précis du bandeau.

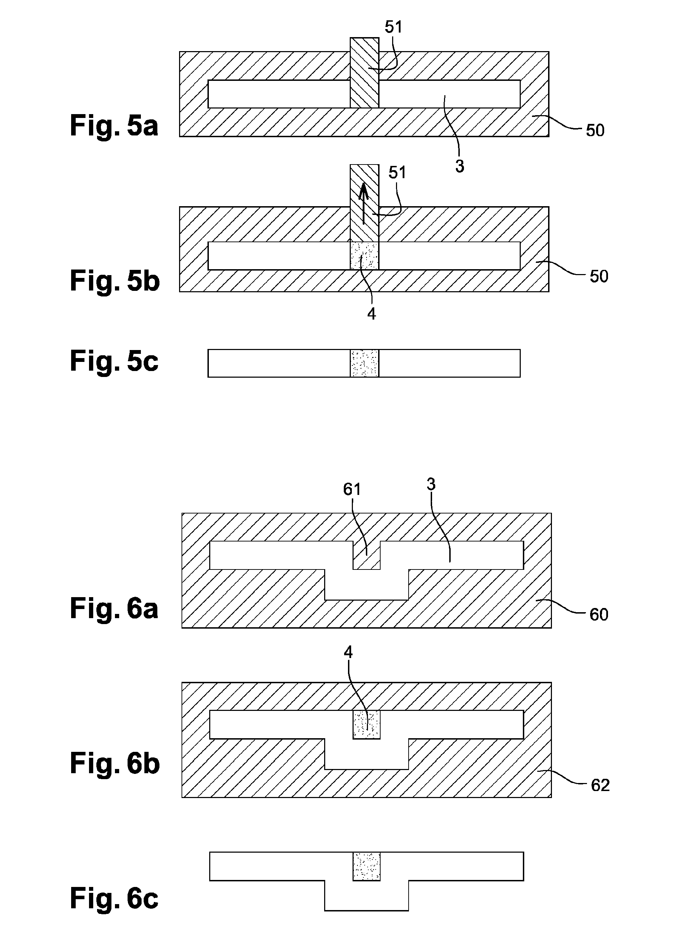

On injecte alors la matière transparente proprement dite puis, on libère la réserve en actionnant le tiroir mobile 51. Dans l'espace ainsi libéré, on injecte la matière diffusante 4, comme cela est illustré aux figures 5a et 5b.

On obtient alors un guide de lumière 3 conforme à l'invention, tel qu'illustré à la figure 5c.

Selon une seconde méthode, si on ne souhaite pas utiliser de moule à tiroir, en raison du prix élevé de ce dernier, on peut alors réaliser le dispositif d'éclairage en injectant dans un premier moule 60, ou une première cavité d'un moule rotatif pour bi-injection, la matière transparente. Ce moule 60 comprend un cordon fixe 61 préfigurant la forme du bandeau.

Puis on transfère ce bloc en matière transparente dans un second moule 62, ou respectivement dans une seconde cavité dudit moule rotatif, et on injecte la matière diffusante dans la partie ainsi libérée et occupée préalablement par le cordon fixe, comme cela est illustré aux figures 6a et 6b. Selon une variante, on pourra inverser les étapes d'injection et venir surmouler le bloc en matière diffusante sur le bandeau formé lors de la première injection.

On obtient alors un guide de lumière 3 conforme à l'invention, tel qu'illustré à la figure 6c.

On observe sur les figures 6 que le bloc transparent comporte un pontage reliant les parties situées en amont et en aval du bandeau diffusant de manière à permettre un transfert aisé de la pièce entre les deux moules 60 et 62.

Dans les deux cas, on peut considérer que les interfaces entre le bandeau diffusant et le bloc transparent sont exemptes d'air et que la lumière passe d'un matériau à l'autre sans perte d'intensité.

Les modes de réalisation de l'invention servant de base à la présente description, ainsi que les procédés d'injection tels que décrits ci-dessus ne sont pas limitatifs, pour autant qu'ils permettent d'obtenir les effets techniques tels décrits et revendiqués.

## Revendications

1. Dispositif d'éclairage ou de signalisation, notamment pour véhicule automobile, comprenant :
- un guide de lumière (3) comportant un bloc transparent, comprenant une surface d'entrée (310) et une surface de sortie de la lumière (320),
- une ou plusieurs sources lumineuses (2) situées en vis-à-vis de la surface d'entrée (310) de la lumière,
du type dans lequel les rayons émis par la source lumineuse pénètrent dans le bloc transparent (3) au niveau de la surface d'entrée (310) de la lumière et se propagent directement ou par réflexions successives sur les parois du bloc transparent selon une direction générale (D) commune vers la surface de sortie (320) au travers de laquelle ils émergent,
**caractérisé en ce qu'**un bandeau (4), composé d'une matière diffusante, est disposé selon une section transversale située entre la surface d'entrée de la lumière (310) et la surface de sortie de la lumière (320), de sorte que les rayons lumineux traversent ledit bandeau (4) en allant de la surface d'entrée de la lumière (310) vers la surface de sortie de la lumière (320).

2. Dispositif selon la revendication 1, dans lequel le bandeau (4) est situé entre une zone d'entrée de la lumière (31) et une zone de sortie de la lumière (32).

3. Dispositif selon la revendication 1 ou la revendication 2, dans lequel le bandeau (4) a une épaisseur (e) constante.

4. Dispositif selon la revendication 1 ou la revendication 2, dans lequel le bandeau (4) a une épaisseur (e) variable.

5. Dispositif selon la revendication 3 ou la revendication 4, dans lequel l'épaisseur (e) du bandeau (4) a une valeur inférieure à 0,2 fois, et de préférence à 0,1 fois une longueur caractéristique (g) de la section transversale occupée par ledit bandeau (4).

6. Dispositif selon la revendication 3 ou la revendication 4, dans lequel l'épaisseur (e) du bandeau (4) est inférieure à 10mm, et de préférence inférieure à 5mm.

7. Dispositif selon l'une des revendications 1 à 6, dans lequel la section transversale sur laquelle est disposé le bandeau (4) est sensiblement perpendiculaire à la direction générale commune (D) de progression des rayons lumineux.

8. Dispositif selon l'une des revendications 1 à 6, dans lequel la section transversale sur laquelle est disposé le bandeau fait un angle donné (a), inférieur à 90°, avec la direction générale commune (D) de progression des rayons lumineux

9. Dispositif selon l'une des revendications 1 à 8, dans lequel le bandeau (4) occupe toute la section transversale sur laquelle il est placé.

10. Dispositif selon l'une des revendications 1 à 8, dans lequel le bandeau (4) occupe seulement partiellement la section transversale sur laquelle il est placé.

11. Dispositif selon l'une des revendications 1 à 10, dans lequel le bandeau (4) est moulé dans le bloc transparent (3).

12. Dispositif selon l'une des revendications 1 à 11 **caractérisé en ce qu'**il comprend un écran opaque et non réfléchissant disposé entre la zone d'entrée (31) et la zone de sortie (32) de manière à bloquer les rayons parasites qui sortiraient du guide de lumière au niveau du bandeau (4).

13. Procédé de fabrication d'un dispositif d'éclairage ou de signalisation selon l'une des revendications 1 à 11, dans lequel le bandeau (4) est obtenu par injection de la matière diffusante dans une section d'un bloc transparent (3) préalablement laissée libre.

14. Procédé de fabrication selon la revendication 12, dans lequel :
- on injecte la matière formant le bloc transparent (3) dans un moule (50) comportant un insert mobile (51) au niveau d'une section transversale donnée et préfigurant la forme du bandeau puis,
- on libère l'insert mobile (51) et on injecte la matière diffusante formant le bandeau (4) dans ladite section transversale ainsi libérée.

15. Procédé de fabrication selon la revendication 12, dans lequel :
- on injecte la matière formant le bloc transparent (3) dans un premier moule (60) ou dans une première cavité d'un moule rotatif, comportant un cordon (61) au niveau d'une section transversale donnée et préfigurant la forme du bandeau puis, on transfère le bloc (3) ainsi formé dans un second moule (62), ou respectivement dans une seconde cavité dudit moule rotatif, et on injecte la matière diffusante formant le bandeau (4) dans ladite section transversale laissée libre.
